# EUROPÄISCHE PATENTSCHRIFT

(11) **EP 3 180 149 B1**
(45) Veröffentlichungstag und Bekanntmachung des Hinweises auf die Patenterteilung: **20.03.2024**
(21) Anmeldenummer: 15756123.4
(22) Anmeldetag: 12.08.2015
(51) Int. Cl.: B23B 51/10, B23B 49/00, B23C 9/00

(54) **ANSCHLAG FÜR EIN BOHR-, FRÄS- ODER SENKWERKZEUG**
STOP FOR A DRILLING, MILLING OR COUNTERSINKING TOOL
BUTÉE POUR OUTIL DE PERÇAGE, FRAISAGE OU LAMAGE

(30) Priorität: 12.08.2014 WO PCT/EP2014/067277; 30.10.2014 DE 102014115768
(43) Veröffentlichungstag der Anmeldung: 21.06.2017
(73) Patentinhaber: Gühring KG, 72458 Albstadt (DE)
(72) Erfinder: REBHOLZ, Felix, 72510 Stetten-Frohnstetten (DE)
(74) Vertreter: Gleim, Christian Ragnar
(86) Internationale Anmeldenummer: PCT/EP2015/068542
(87) Internationale Veröffentlichungsnummer: WO 2016/023944

(56) Entgegenhaltungen:
- DE-A1- 10 154 434
- DE-A1-102008 022 968
- DE-A1-102010 014 022
- GB-A- 488 242
- GB-A- 2 269 333
- US-A- 2 383 854
- US-A- 2 477 891
- US-A- 4 928 997
- US-B1- 7 607 871

## Beschreibung

Die Erfindung betrifft einen Anschlag für ein rotierendes Bohr-, Fräs- oder Senkwerkzeug sowie ein Werkzeug, an dessen Werkzeugschaft ein Anschlag befestigt ist. Ein Anschlag gemäß dem Oberbegriff des Anspruchs 1 ist sowohl aus der DE 101 54 434 A1 als auch aus der US 2 477 891 A bekannt.

### STAND DER TECHNIK

Aus dem Stand der Technik sind Anschläge für ein Bohr-, Fräs- oder Senkwerkzeug bekannt, die als sogenannte "Microstop"-Adapter bezeichnet werden. Diese Adapter umfassen in der Regel einen Bohrschaft zur Aufnahme in ein Spannfutter einer Drehmaschine oder eines handgehaltenen Drehwerkzeugs und ein Lager, mit denen eine Anschlaghülse sich frei um einen in den Adapter eingesetzten Bohr-, Fräs- oder Senkkopf drehen kann, so dass bei Erreichen einer vorgegebenen Eindringtiefe in ein Bauteil die Anschlaghülse auf der Oberfläche des Bauteils aufsetzen kann, und sich der Bohr-, Fräs-, oder Senkkopf frei drehen kann. Derartige Anschläge werden insbesondere für Senk- oder Fräsarbeiten im Fahrzeug- und Flugzeugbau eingesetzt.

Der Bohrschaft derartiger Microstop-Adapter wird im Gebrauch in ein Spannfutter eines Bohrwerkzeugs, beispielsweise einer Bohrmaschine, oder eines Fräswerkzeugs aufgenommen. Die Anschlaghülse kann mit einem axialen Verstellgewinde versehen sein, womit die Längsposition der Anschlaghülse relativ zum Werkzeugkopf verstellt und somit die Anschlagtiefe eingestellt werden kann. Der Adapter weist eine Aufnahme, beispielsweise ein Schraubgewinde, einen Bajonettverschluss oder eine Schnellspanneinrichtung zur Aufnahme des Bohr-, Fräs- oder Senkkopfs auf, um diesen zentrisch in der Anschlaghülse zu lagern. Somit umfassen bekannte Microstop-Adapter einen Bohrschaft und die frei drehbar gelagerte Anschlaghülse, und der Werkzeugkopf kann nach Bedarf ausgewechselt werden. Somit wird ein Anschlagadapter mit Bohrschaft bereitgestellt, in dem ein Spanbearbeitungswerkzeugkopf zur rotierenden Spanbearbeitung eingesetzt werden kann.

Aus der DE 101 54 434 B4 geht eine Anschlagvorrichtung mit Werkzeugschaft hervor, die eine frei drehbare Anschlaghülse umfasst, die um einen Werkzeugschaft der Anschlagvorrichtung mittels eines einzigen Drehlagers verdrehbar ist. Ein Bohr- oder Fräswerkzeug kann in den Werkzeugschaft der Anschlagvorrichtung eingesetzt und drehfest arretiert werden.

Die GB 4 882 42 A offenbart einen Anschlagadapter, der eine Anschlaghülse mit Spindelschaft umfasst, an dem die Anschlaghülse drehbar gelagert ist, und in der ein Werkzeug, beispielsweise ein Senkwerkzeugbit eingesetzt werden kann. Somit handelt es sich um einen gattungsgemäßen, vorgenannten Microstop-Adapter, der nicht nachträglich an ein spanabhebendes Werkzeug mit Schaft aufgebracht werden kann.

In der US 7 607 871 B1 und in der GB 22 693 33 A sind weitere gattungsgemäße Mikrostop-Adapter Anschlaghülsen mit Adapteraufnahmen für ein speziell dafür vorgesehenes Werkzeugbit vorgesehen.

In der DE 10 2008 022968 A1 sind wiederum mehrere Ausführungsformen von Microstop-Adaptern dargestellt, wobei auch ein Werkzeug mit einem Werkzeugschaft dargestellt ist, bei dem der Werkzeugschaft einen Gewindeabschnitt trägt, auf dem eine Stellhülse aufgeschraubt und mittels einer Inbusschraube lagefixiert werden kann. Die Stellhülse weist einen Rastring auf, auf dem eine Anschlaghülse reibschlüssig mit der Stellhülse aufgerastet und drehmitgeschleppt werden kann. Der Werkzeugschaft des Werkzeugs muss einen entsprechenden Gewindeabschnitt aufweisen, um die Anschlaghülse befestigen zu können.

Bei den bekannten Microstop-Adaptern ergibt sich das Problem, dass durch das auswechselbare Einsetzen des Werkzeugkopfs in die Adapteraufnahme ein schlechter Rundlauf des Werkzeugkopfs und damit eine minderwertige Bohrung, Senkung oder Fräsbearbeitung auftreten kann. Des Weiteren kann bei einer Fehlaufnahme bzw. einem Aufnahmespiel zwischen Adapter und Werkzeugkopf nicht nur der Rundlauf, sondern auch die Winkellage des Werkzeugkopfs in der Bohrungsvertiefung ungünstig verändert werden, so dass eine Bearbeitungsqualität herabgesetzt wird. Abhängig davon, in welche Richtung ein Werker Druck auf das Werkzeug ausübt, können unterschiedliche Arbeitsergebnisse entstehen.

Ferner ist aus dem Stand der Technik die US 2477891 bekannt, die keinen optimalen Rundlauf, definierten Aufsetzwinkellage und präzise Anschlageinstellung ermöglicht.

Ausgehend von dem oben dargestellten Problem ergibt sich die Aufgabe, einen Anschlag für ein Bohr-, Senk- oder Fräswerkzeug auszubilden, der einen optimalen Rundlauf, eine definierte Aufsetzwinkellage für die spannende Bearbeitung und eine präzise Anschlageinstellung ermöglicht und auf ein gewöhnliches spanabhebendes Werkzeug mit einem gewindefreiem Werkzeugschaft befestigt werden kann, und somit die vorgenannten Nachteile des Stands der Technik überwindet.

Diese Aufgabe wird durch einen Anschlag sowie ein Bohrwerkzeug, das mit einem derartigen Anschlag ausgerüstet ist, gelöst. Vorteilhafte Weiterentwicklungen der Erfindung sind Gegenstand der Unteransprüche.

### OFFENBARUNG DER ERFINDUNG

In einem ersten erfindungsgemäßen Aspekt wird ein Anschlag für ein rotierendes Bohr-, Fräs- oder Senkwerkzeug vorgeschlagen, wobei eine Anschlaghülse durch ein Gleit- oder Wälzlager frei drehend an dem Bohrwerkzeug angeordnet ist. Es wird vorgeschlagen, dass eine erste Lagerbuchse des Wälz- oder Gleitlagers die Anschlaghülse trägt und eine zweite Lagerbuchse des Lagers drehfest auf einer Schafthülse sitzt. Die Schafthülse ist auf einem Schaft des Werkzeugs aufschiebbar und befestigbar. Mit anderen Worten wird ein Anschlag vorgeschlagen, der unmittelbar auf einen Schaft eines einstückigen Bohr-, Fräs- oder Senkwerkzeugs aufgeschoben und befestigt werden kann. Die Schafthülse koppelt die Anschlaghülse über ein Drehlager mit dem Werkzeugschaft eines in die Schafthülse ein- setzbaren Rotationswerkzeugs. Der Werkzeugschaft ist dabei gewindefrei ausgeführt, d.h. er ist in der Regel glatt und ohne Gewindeabschnitt ausgeführt. Hierdurch ergibt sich keine radiale Verdickung des Werkzeugschafts gegenüber dem Schaftnenndurchmesser. Die Schafthülse kann drehfest an einer axialen Position des Werkzeugschafts befestigt werden. Die Position der Schafthülse am Werkzeugschaft und die Position der Anschlaghülse an der Lagerbuche definieren die Eintauchtiefe des Werkzeugs, bis zu der die Anschlaghülse auf einer Oberfläche eines zu bearbeitenden Werkstücks aufsetzt. Wird eine hierdurch festgelegte Ein-tauchtiefe erreicht, sitzt ein stirnseitiger Anschlagring der Anschlaghülse auf der Werkzeugoberfläche auf, während sich das Werkzeug im Inneren frei mit der Schafthülse dreht, und die Anschlaghülse aufgrund der Gleit- oder Wälzlagerkopp- lung mit dem Verstellring auf der Bauteiloberfläche ruhen kann.

Somit wird anstelle eines "Microstop"-Adapters mit Adapterschaft ein an einem Bohr-, Fräs- oder Senkwerkzeug mit einstückigem Werkzeugschaft ankoppelbarer "Microstop"-Anschlag vorgeschlagen, der auf den Werkzeugschaft eines beliebigen Bohr-, Fräs- oder Senkwerkzeugs aufgeschoben und befestigt werden kann, und der mit einem frei einstellbaren Anschlag, zur Festlegung einer Eindringtiefe des Werkzeugs an ein Bauteil, eingestellt werden kann. Der Schaft des Werk- zeugs kann unmittelbar in ein Spannfutter einer Drehmaschine oder einer Bohr- maschine eingespannt werden, so dass ein optimaler Rundlauf gewährleistet ist. Der Ansetzwinkel des Werkzeugs kann optimal gewählt werden, wobei die An- schlaghülse keine mittelbare Verbindung zwischen Werkzeugkopf und antreibendem Bohrwerkzeug bildet, sondern lediglich auf dem Bohrschaft des Werkzeugs aufsetzt. Der Tiefenanschlag wird durch die Position der Schafthülse auf dem Bohrschaft sowie die relative axiale Position der frei drehbaren Anschlaghülse zur Schafthülse definiert. Beliebige Drehwerkzeuge können mit einem erfindungsge- mäßen Anschlag nachgerüstet werden.

In einer erfindungsgemäßen Weiterbildung wird vorgeschlagen, zumindest ein zweites oder weitere axial versetzte Lager zwischen Anschlaghülse und Schafthülse anzuordnen, so dass eine parallele Ausrichtung der Anschlaghülse gegenüber dem Werkzeug gewährleistet wird. Durch ein zweites oder weitere Lager kann die Anschlaghülse axial zentriert gegenüber der Schafthülse und somit gegenüber dem Bohrschaft des Werkzeugs ausgerichtet werden, so dass bei Erreichen des Anschlagpunktes die Winkellage vom Anschlag gegenüber Werkzeugachse präzise definiert ist. Dies verbessert die Genauigkeit des Tiefenanschlags sowie der Winkellage des Bohr- oder Fräswerkzeugs bei Erreichen der vorgegebenen Anschlagtiefe.

In einer erfindungsgemäßen Weiterbildung kann der Anschlag eine Arretiermutter, insbesondere eine Rändelmutter umfassen, die auf einem fakultativen Verstellgewinde des Werkezugschafts aufschraubbar ist, und die zur konternden Arretierung der Schafthülse ausgelegt ist.

Aus dem Stand der Technik ist bereits bekannt, dass am Werkzeugschaft ein Gewindeabschnitt vorgesehen sein kann, auf dem die Schafthülse mittels eines Innengewindes auf dem Werkzeugschaft aufgeschraubt werden kann. Hierzu muss allerdings der Werkzeugschaft einen gesondert dafür vorgesehenen Werkzeugschaft aufweisen, wodurch die eingesetzten Werkzeuge nicht mehr universell einsetzbar werden, und deren Schaftdurchmesser beim Einsatz ohne Anschlag unnö- tig vergrößert wird. Vorteilhafterweise kann die Schafthülse unmittelbar am gewindefreien Werkzeugschaft angeklebt, aufgepresst oder aufgeklemmt werden. Jedes beliebige spanabhebende Drehwerkzeug lässt sich mit dem Anschlag nachrüsten. Somit kann die Schafthülse mittels eines Klebstoffs, insbesondere eines Metallklebers, beispielsweise mittels eines Zweikomponenten-Metallklebers wie einem 2K-Epoxidharzklebstoff oder 2K-Acrylatkleber mit dem Schaft verklebt werden. Hierbei kann eine beliebige Einstellposition der Schafthülse am Werkzeugschaft sehr einfach eingestellt und der Kleber ausgehärtet werden, wobei eine einfache und kostengünstige Befestigung des Anschlags an einem Werkzeug erreicht werden kann. Auch ist eine Befestigung mittels thermischer Sehrumpfpassung denk- bar, wobei eine erwärmte, aufgeweitete Schafthülse auf einen Werkzeugschaft aufgebracht und an einer gewünschten Position abgekühlt wird, um eine kraftschlüssige Verbindung bereitzustellen. Letztlich kann die Schafthülse auch mittels Klemmverbindung, beispielsweise durch ein klemmendes Aufweiten oder eine Klemmsehelle, Klemmschraube oder ähnliches am Werkzeugschaft befestigt werden. Die Schafthülse trägt die inneren Lagerbuchsen der Anschlaghülse. Die Anschlagtiefe wird durch die axiale Position der Schafthülse auf dem Werkzeugschaft sowie die Position der Anschlaghülse gegenüber den äußeren Lagerbuchsen definiert.

In einer vorteilhaften Weiterbildung kann die erste Lagerbuche in die Anschlaghül- se eingeklebt oder eingepresst sein. Somit kann die axiale Lage der Anschlaghülse gegenüber der Lagerbuchse durch eine Klebe- oder Pressverbindung festgelegt werden. Als Klebstoff kann ein Metallkleber verwendet werden, eine Pressverbindung kann vorteilhafterweise als thermische Sehrumpfverbindung ausgebildet sein. Somit ergeben sich als Freiheitsgrad zur Einstellung der Anschlagtiefe zum einen die axiale Position der Schafthülse am Werkzeugschaft, zum anderen die Position der Anschlaghülse gegenüber dem Lager, der die Anschlaghülsefrei drehend mit der Schafthülse verbindet. Die Arretiermutter kann eine Konterarretierung der Schafthülse auf dem Werkzeugschaft bewirken, insbesondere wenn die Schafthülse zumindest partiell mittels einer Schraubverbindung am Werkzeugschaft aufgeschraubt ist. Mittels der Arretiermutter kann der Verstellring auf der Verstellhülse gekontert werden, so dass eine Anschlagtiefe fixiert werden kann und ein unbeabsichtigtes Verändern der Anschlagtiefe verhindert wird. Somit können eine hohe Anzahl von Senk- oder Fräsbearbeitungen mit gleichem Tiefenanschlag selbst bei einer rauen Handhabung des Werkzeugs mit gleichem Arbeitsergebnis vorgenommen werden. Sofern eine Arretiermutter vorhanden ist, ist weiterhin denkbar, dass die Arretiermutter eine Feststellschraub umfasst, mit der die Axialposition der Arretiermutter auf dem Werkzeugschaft fixierbar ist. Die Arretiermutter kann beispielsweise, radial in der Arretiermutter ausgerichtet, in eine Vertiefung des Werkzeugschafts eingreifen oder die Arretiermutter gegen den Schaft verklemmen, und somit die Drehposition der Arretiermutter auf dem Werkzeugschaft fixieren.

In vorteilhafter Weise kann die Arretiermutter einen Werkzeug-Gewindeschaft oder einen Werkzeug-Schnellwechselschaft umfassen. Somit kann die Arretiermutter gleichzeitig den Richtung Spannfutter bildenden Abschluss des Werkzeugs bilden, und eine Schaftaufnahme beispielsweise als Werkzeuggewinde zum Einschrauben in ein Spannfutter oder einen Schnellwechselschaft, beispielsweise einen Clickchange-Schaft umfassen. Das Senkwerkzeug ist im Anschlag aufgenommen und fixiert und der Anschlag verbindet das Senkwerkzeug mit dem Spannfutter. Hierdurch kann ein Werkzeug durch Aufnahme in den Anschlag in verschiedenar- tigen Spannfuttern eingespannt werden.

In der Regel ist ein einziges Lager ausreichend, um die Anschlaghülse gegenüber der Schafthülse drehbar zu lagern.

Die Befestigung der Schafthülse am Werkzeugschaft kann grundsätzlich beliebig erfolgen, beispielsweise kann am Werkzeugschaft ein Außengewinde vorgesehen sein, worauf ein Innengewinde der Schafthülse aufgeschraubt werden kann, oder die Innenoberfläche der Schafthülse wird mit einer Außenfläche des Werkzeugschafts verklebt. In einer bevorzugten Ausführungsform kann die Schafthülse im axial von der Anschlaghülse gegenüberliegenden Bohrschaftendbereich zum indest eine, insbesondere zwei oder mehrere, radial wirkende Verspannmittel umfassen, mittels derer die Schafthülse drehfest und axial fixierend mit dem Werkzeugschaft verspannbar ist. Durch eine verspannende Befestigung kann eine schnelle Lösbarkeit des Anschlags vom Bohrschaft erreicht und somit ein schnelles Auswechseln oder eine Verstellung der Anschlagstiefe ermöglicht werden. Des Weiteren können durch ein Verspannmittel, beispielsweise eine Klemme oder eine Spannschraube, auf zusätzliche Befestigungselemente am Werkzeugschaft wie Gewinde verzichtet werden. Somit können Standardfräs-, -bohr-, oder - senkwerkzeuge mit einem Anschlag nachgerüstet werden, an denen der Anschlag verspannend befestigt werden kann.

Als Verspannmittel kann in einer bevorzugten Ausführungsform eine oder mehrere Verspannschrauben, insbesondere Inbusschrauben eingesetzt werden, die bevorzugt in radial ausgerichtete Eingriffsvertiefungen oder Fixiergewinde des Werkzeugschafts drehfest und axial arretierend eingreifen können. Durch Verspannschrauben, insbesondere Inbusschrauben, kann die Schafthülse am Werkzeugschaft an einer beliebigen Position befestigt werden. Sind am Werkzeugschaft Eingriffsvertiefungen, beispielsweise Senkvertiefungen, angeordnet, so können die Inbusschrauben in diese Vertiefungen eingreifen, wobei hierdurch die Schafthülse an einer definierten Stelle des Werkzeugschafts drehfest befestigt wird. Alternativ können radial ausgerichtet im Werkzeugschaft Fixiergewinde angeordnet sein, so dass Inbusschrauben in das Fixiergewinde eingeschraubt werden können, um die Schafthülse am Werkzeugschaft zu befestigen. Die Befestigung des Anschlags an eine hierfür besonders hergerichtete Stelle des Werkzeugschafts hat den Vorteil, dass eine einmal eingestellte Anschlagtiefe auch beim Wechseln des Werkzeugs beibehalten werden kann. Inbusschrauben lassen sich einfach lösen und anziehen, so dass ein schnelles Wechseln des Werkzeugs ermöglicht wird. Durch ein Verspannen der Schafthülse können beliebige Anschlagtiefen des Werkzeugs eingestellt werden.

Alternativ zu der obigen Ausführungsform können vorteilhafterweise Klemmmittel, insbesondere ein Klemmring oder eine Klemmschelle, an der Schafthülse umfasst sein, wodurch die Schafthülse am Werkzeugschaft klemmend fixierbar sein kann. Derartige Klemmmittel können ein Klemmring oder eine Klemmschelle sein, die insbesondere werkzeugfrei mittels eines Klemmhebels oder einer Klemmschraube verspannt bzw. gelöst werden, um den Anschlag mit einem Werkzeugschaft zu verbinden. Dies erleichtert die Handhabung, insbesondere das Auswechseln des Werkzeugs oder ein Verschieben des Anschlags auf dem Werkzeugschaft, so dass beliebige Anschlagtiefen eingestellt werden können. Hierdurch kann der Aufwand beim Werkzeugwechsel und die Einsatzfähigkeit des Anschlags deutlich erweitert werden.

Bohr-, Fräs- oder Senkwerkzeuge weisen je nach Einsatztyp unterschiedliche Radien des Werkzeugschafts auf. Um einen Anschlag an verschiedene Werkzeugschaftdurchmesser anzupassen, kann es vorteilhaft sein, dass eine oder mehrere Adapterbuchsen vorgesehen sind, die in die Schafthülse einsteckbar sind, um den Innendurchmesser der Schafthülse an einen variierenden Werkzeugschaftdurchmesser anpassen zu können. Somit kann mit einem Anschlag und mehreren Adapterbuchsen eine Vielzahl von Werkzeugen mit unterschiedlichen Schaftdurchmessern mit einem gleichen Anschlag versehen werden, so dass ein universell auswechselbarer Anschlag vorgeschlagen wird, der auf beliebige Werkzeuge aufgesteckt, verklebt, oder und an diesen klemmend befestigt werden kann. Dies senkt die Anschaffungskosten und erweitert den Einsatzbereich des Anschlags für eine Vielzahl unterschiedlicher Anwendungen. Es ist denkbar, ein Set mit einem Anschlag und einem oder mehreren Adapterbuchsen zu konfektionieren.

In einer vorteilhaften Weiterentwicklung der Erfindung kann eine Spannschraube auf einem Spanngewinde der Schafthülse angeordnet sein, durch die ein Lagerspiel des Drehlagers einstellbar ist. Die Lagerspannschraube kann auf einem Außengewinde der Schafthülse als Lagerspanngewinde angeordnet sein und kann ein axiales Spiel des Lagers ermöglichen, so dass zum einen eine geringfügige axiale Beweglichkeit der Anschlaghülse gegenüber der Werkzeugachse einstellbar, und/oder ein Drehmoment der Anschlaghülse gegenüber der Schafthülse einstellbar ist. Hierdurch kann des Weiteren eine Feineinstellung der Anschlagstiefe erreicht werden.

In einem nebengeordneten Aspekt wird ein Bohr-, Fräs- oder Senkwerkzeug mit Anschlag vorgeschlagen, wobei am Werkzeugschaft ein Anschlag nach einem der vorgenannten Ausführungsformen befestigt ist. Ein derartiges Werkzeug kann grundsätzlich aus einem Bohr-, Fräs- oder Senkwerkzeug nach dem Stand der Technik, kombiniert mit einem oben dargestellten Anschlag, ausgebildet sein.

Der Anschlag kann beispielsweise als Set mit einer Mehrzahl von verschiedenen Bohr- Fräs- oder Senkwerkzeugen angeboten werden. Der Anschlag kann einzeln oder in Kombination mit einem oder mehreren Rotationswerkzeugen angeboten werden. In dem Set können eine oder mehrere Adapterbuchsen zum Anpassen an verschiedene Schaftdurchmesser von Werkzeugen enthalten sein. Mittels des Anschlags ist es möglich, Standardwerkzeuge mit einem Tiefenanschlag nachzurüsten, und so an den Vorteil der Erfindung zu gelangen.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: einen Microstop-Anschlagadapter mit Werkzeugkopf nach dem Stand der Technik;
- **Fig. 2**: eine Schnittdarstellung durch eine Ausführungsform eines Anschlags mit Seitendarstellung eines hierzu verwendbaren Werkzeugs;
- **Fig. 3**: in einer Schnittdarstellung eine weitere Ausführungsform eines erfindungsgemäßen Anschlags;
- **Fig. 4**: in einer Schnittdarstellung eine weitere Ausführungsform eines erfindungsgemäßen Anschlags mit zugehörigem Senkwerkzeug;
- **Fig. 5**: eine Schnittdarstellung durch eine Ausführungsform eines Anschlags mit Seitendarstellung eines hierzu verwendbaren Werkzeugs;
- **Figs. 6, 7, 8**: weitere Ausführungsformen von Senkwerkzeugen mit einem Anschlag gemäß der Erfindung.

In den Figuren sind gleiche oder gleichartige Komponenten mit gleichen Bezugszeichen beziffert.

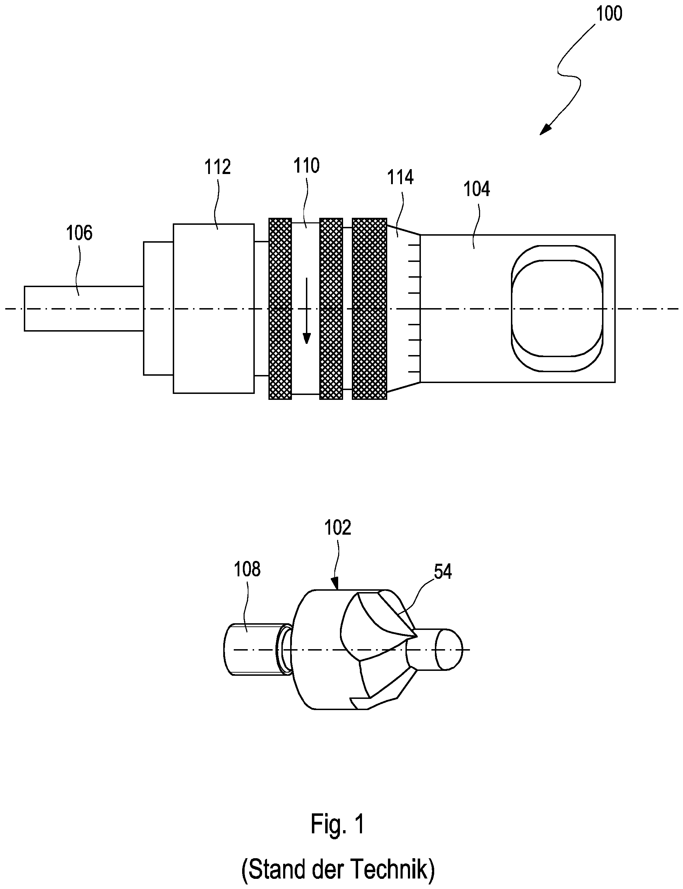

In der Fig. 1 ist in einer Seitendarstellung ein Anschlagadapter 100 mit Anschlaghülse aus dem Stand der Technik dargestellt. Der Microstop-Anschlagadapter 100 umfasst eine Anschlaghülse 104, einen Verstellring 110 mit Endhülse 112 sowie einen Adapterschaft 106. Der Verstellring 110 ist mit einer Feinverstellung 114 gekoppelt, wobei der Verstellring 110 eine Grobverstellung und die Feinverstellung 114 eine Feinverstellung der Anschlaghülse 104 gegenüber dem Werkzeugschaft 106 ermöglicht. Hierzu ist eine Skalenmarkierung auf dem Feinverstellungsring 114 angebracht. Die Anschlaghülse 104 ist durch ein nicht dargestelltes Lager gegenüber dem Werkzeugschaft 106 frei drehbar gelagert, so dass diese bei Aufsetzen auf der Oberfläche eines Bauteils ein Weiterdrehen des Werkzeugs 100 ermöglicht, und die Anschlaghülse 104 auf der Oberfläche des Bauteils ruhend aufsetzen kann. Im unteren Teilbild ist ein Werkzeugkopf 102, in diesem Fall ein Senkwerkzeug mit einer Vielzahl von Schneidkanten 54 dargestellt, der mittels eines Einschraubgewindes 108 in ein Gewinde des Adapters 100 eingeschraubt werden kann. Bei der Aufnahme des Werkzeugkopfs 102 in ein Gewinde des Anschlagadapters 100 besteht die Gefahr einer axialen Fehlausrichtung, so dass ein Rundlauf der Schneiden 54 des Werkzeugkopfs 102 gegenüber dem Bohrschaft 106 nicht gegeben ist, so dass sich ein unrunder Lauf des Senkwerkzeugs ergibt, und beim Aufsetzen und Senken des Werkzeugs weder eine kreisförmige Bewegung des Werkzeugkopfes gegeben ist, noch der Ansetzwinkel wie gewünscht eingestellt werden kann. Somit werden je nach Qualität der Aufnahme bzw. des Einschraubgewindes gegenüber der Werkzeugaufnahme des Anschlagadapters 100 unterschiedliche Bearbeitungsergebnisse erzielt. Insbesondere nach langem Gebrauch kann die Werkzeugaufnahme des Anschlagadapters Verschleiß aufweisen, so dass sich die Bearbeitungsergebnisse verschlechtern.

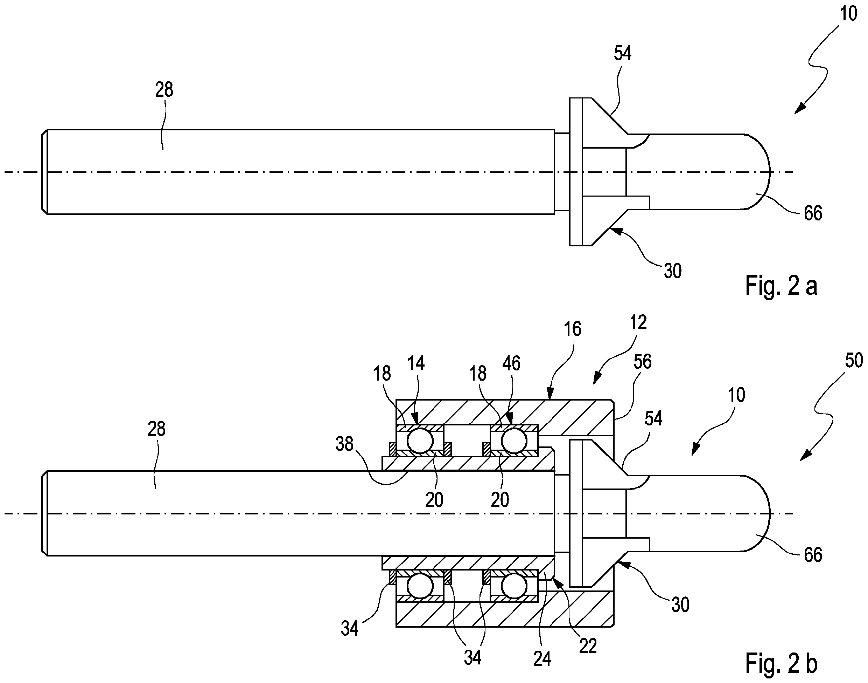

Die Fig. 2 zeigt eine erste Ausführung eines Anschlag-Entgratungswerkzeugs 50. Das in Fig. 2a dargestellte Senkwerkzeug 10 umfasst einen Werkzeugschaft 28 und einen Werkzeugkopf 30, der einen abgerundeten Einführzapfen 66 und eine Mehrzahl von Entgratungs- bzw. Senkschneiden 54 aufweist.

Der Anschlag 12 umfasst, wie in Fig. 2b dargestellt, eine Anschlaghülse 16, die mittels zweier Kugellager 14, 46 frei drehbar um eine Schafthülse 22 gelagert ist. Die Schafthülse 22 kann axial auf den Werkzeugschaft 28 bis zum Werkzeugkopf 30 aufgeschoben und an einer axialen Stelle des Schafts 28, die die Anschlagtiefe definiert, mittels einer Klebeverbindung 38 am Schaft 28 drehfest kraftschlüssig verbunden werden. Die erste Lagerbuchse 18 des ersten und zweiten Kugellagers 14, 46 ist in der Innenwandung der Anschlaghülse 16 eingeklebt. Die zweite Lagerbuchse 20 des ersten Kugellagers ist auf der Schafthülse 22 mittels zweier Lagerringe 34 fixiert und kann gleichwohl auf der Schafthülse 22 aufgeklebt sein. Die zweite Lagerbuchse 20 des zweiten Kugellagers 46 ist durch einen Gegenlagerring 24 der Schafthülse 22 und einem Lagerring 34 arretiert. Die Anschlaghülse 16 kann sich über die beiden Lager 14, 46 gegenüber der Schafthülse 22 verdrehen. Die Schafthülse 22 ist kraftschlüssig auf dem Schaft 28 des Werkzeugs 10 verklebt, wobei die axiale Klebeposition die Anschlagtiefe des Werkzeugs 10 definiert.

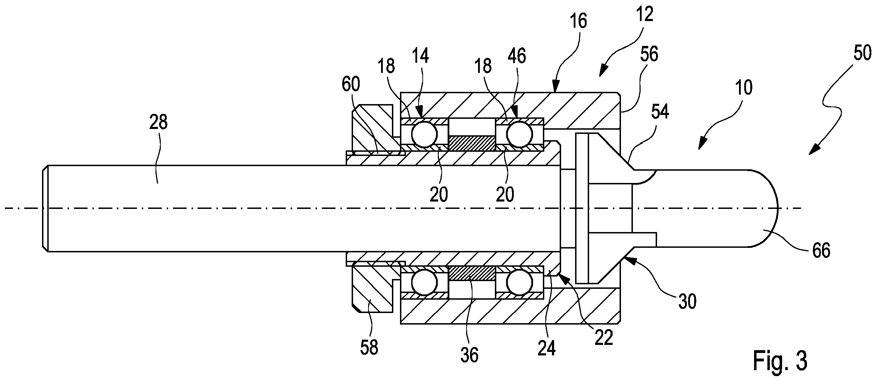

In der Fig. 3 ist eine auf der Fig. 2 basierende weitere Ausführungsform eines Werkzeugs 10 dargestellt. Die Schafthülse 22 weist an einem, dem Werkzeugkopf 30 abgewandten axialen Ende ein Lagerspanngewinde 60 auf. Auf dem Lagerspanngewinde 60 ist eine Lagerspannmutter 58 aufgeschraubt. Die zweiten Lagerbuchsen 20 des ersten und zweiten Lagers 14, 46 können durch die Lagerspannmutter 58 und einer Lagerverbindungshülse 36 zwischen der Lagerspannmutter 58 und einem Gegenlagerring 24 der Schafthülse 22 verspannt werden. Hierdurch kann ein axiales Spiel der Anschlaghülse 16 gegenüber der Schafthülse 22 sowie ein Lagerdrehmoment der Lager 14, 46 eingestellt werden. Die Schafthülse 22 kann auf dem Werkzeugschaft 28 mittels eines Metallklebers aufgeklebt werden, oder mittels einer thermischen Schrumpfpassung kraftschlüssig verbunden werden. Die axiale Position der Schafthülse 22 auf dem Werkzeugschaft 28 bestimmt die Anschlagtiefe des Werkzeugkopfs 30, bis der Anschlagring 56 auf einer Oberfläche eines zu bearbeitenden Werkstücks aufsetzt.

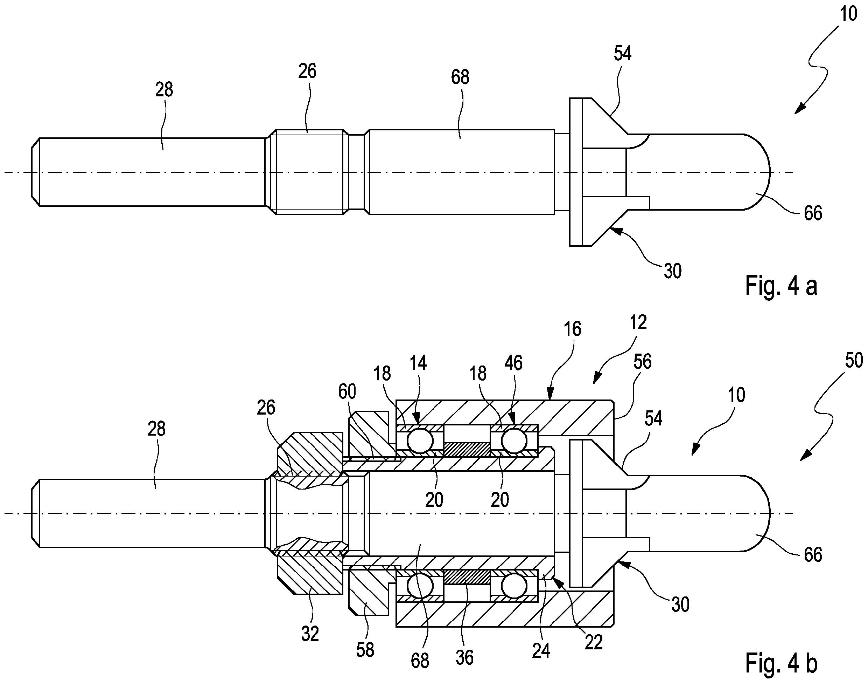

In der Fig. 4 ist ein weiteres Ausführungsbeispiel eines Anschlags 12 für ein Werkzeug 10 dargestellt. Das in Fig. 4a dargestellte Werkzeug 10 weist auf seinem Werkzeugschaft 28 ein fakultatives Verstellgewinde 26 auf. Der Anschlag 12 kann über den Schaft 28 und das Verstellgewinde 26 hinweg auf den Schafthülse -Aufnahmebereich 68 des Schafts 28 in den Bereich des Werkzeugkopfs 30 geschoben und im Aufnahmebereich 68 verklebt oder verspannt werden. Daneben ist denkbar, dass - wie aus dem Stand der Technik bekannt - zumindest bereichsweise ein Innengewindeabschnitt der Schafthülse 22 bereichsweise auf dem Verstellgewinde 26 aufgeschraubt ist, um eine axiale Position des Anschlags 12 auf dem Schaft 28 zu definieren. Der Aufnahmebereich 68 kann eine Oberflächenkontur zur drehfesten Arretierung der Schafthülse 22, beispielsweise Längsriefen aufweisen. Der Anschlag 12 entspricht in seinen konstruktiven Details der in Fig. 3 dargestellten Ausführungsform. So weist der Anschlag 12 eine Schafthülse 22 auf, die zwei Lager 14, 46 trägt, durch die eine Anschlaghülse 16 um die Schafthülse 22 drehbar ist. Ein Lagerspiel der Lager 14, 46 lässt sich über eine Lagerspannmutter 58, die auf einem Lagerspanngewinde 60 der Anschlaghülse 22 aufgeschraubt ist und über eine Lagerverbindungshülse 36 gegenüber einem Gegenlagerring der Anschlaghülse 22 einstellen. Auf dem Verstellgewinde 26 ist eine Arretiermutter 32 aufgeschraubt, die als Sicherungsmittel ein rückwärtiges Verschieben der Schafthülse 22 verhindert und die maximale Anschlagtiefe der Anschlaghülse 16 gewährleistet. Ist die Schafthülse 22 teilweise auf dem Gewinde 26 aufgeschraubt, so kann die Arretiermutter 32 die Schafthülse 22 drehfest kontern. Hierdurch kann die Arretiermutter 32 die Eintauchtiefe des Entgradungswerkzeugs 50 einstellen. Das Verstellgewinde 26 des Werkzeugschafts 28 dient zur Befestigung der Arretiermutter 32, die eine maximale Eintauchtiefe definiert und z.B. beim Versagen der Klemmung oder des Klebmittels den Anschlag auf dem Schaft in axialer Richtung fixiert.

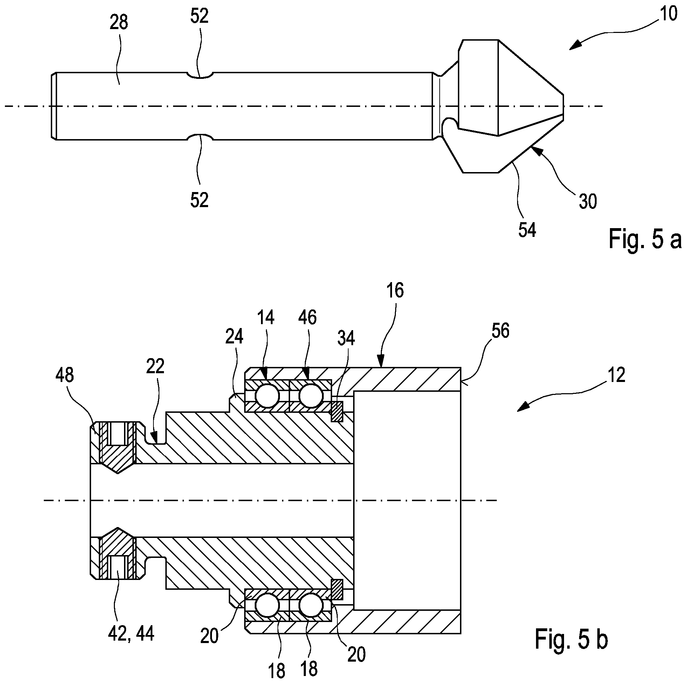

In den Figs. 5a und 5b ist in einer Seitendarstellung sowohl der Anschlag 12 als auch ein Senkwerkzeug 10 eines weiteren Ausführungsbeispiels dargestellt. Der Anschlag 12 umfasst eine Schafthülse 22, die auf dem Schaft 28 des Werkzeugs 10 aufgeschoben und drehfest verklemmt werden kann. Der axiale Endbereich 48 des Anschlags 12, der in Richtung des Bohrschafts 28 des eingeschobenen Werkzeugs 10 liegt, ist radial vergrößert und weist radial ausgerichtete Bohrungen auf, in denen Verspannschrauben 44 als Verspannmittel 42 eingreifen, um die Schafthülse 22 gegenüber dem Werkzeugschaft 28 des Werkzeugs 10 zu verspannen. Die Verspannschrauben 42 dienen zum drehfesten axialen Fixieren des Anschlags 12 auf dem Schaft 28 des Senkwerkzeugs 10. Die Spannposition der Schafthülse 22 auf dem Schaft 28 definiert die Anschlagtiefe. Die Anschlaghülse 16 ist mittels zweier Lager 14 und 46 auf der Schafthülse 22 frei drehend gelagert. Jedes Lager 14, 46 weist eine erste äußere Lagerbuchse 18 und eine zweite innere Lagerbuchse 20 auf. Die innere Lagerbuchse 20 ist an der Schafthülse 22 zwischen einem Gegenlagerring 24 und einem Lagerring 34 geklemmt, während die äußere Lagerbuchse 18 an der Anschlaghülse 16 durch einen Klebstoff befestigt ist. Dazwischen ist entweder ein Gleitfilm oder es sind Kugel oder Zylinderwälzelemente angeordnet, um die Anschlaghülse 16 frei drehbar gegenüber der Schafthülse 22 zu lagern. Der Werkzeugschaft 28 des Senkwerkzeugs 10 kann in die Schafthülse 22 eingeschoben werden, wobei die Verspannschrauben 44 in Eingriffsvertiefungen 52 des Bohrschafts 28 eingeschraubt werden können, um den Anschlag 12 drehfest auf dem Werkzeugschaft 28 zu arretieren. Durch die Eingriffsvertiefungen 52 ist die axiale Längsposition der Schafthülse 22 auf dem Werkzeugschaft 28 festgelegt, so dass die Anschlagtiefe durch die Lage der Eingriffsvertiefungen 52 definiert ist. Somit dienen die Eingriffsvertiefungen 52 einer erleichterten Befestigung, wobei bei einem Auswechseln des Werkzeugs 10 eine voreingestellte Anschlagtiefe beibehalten werden kann.

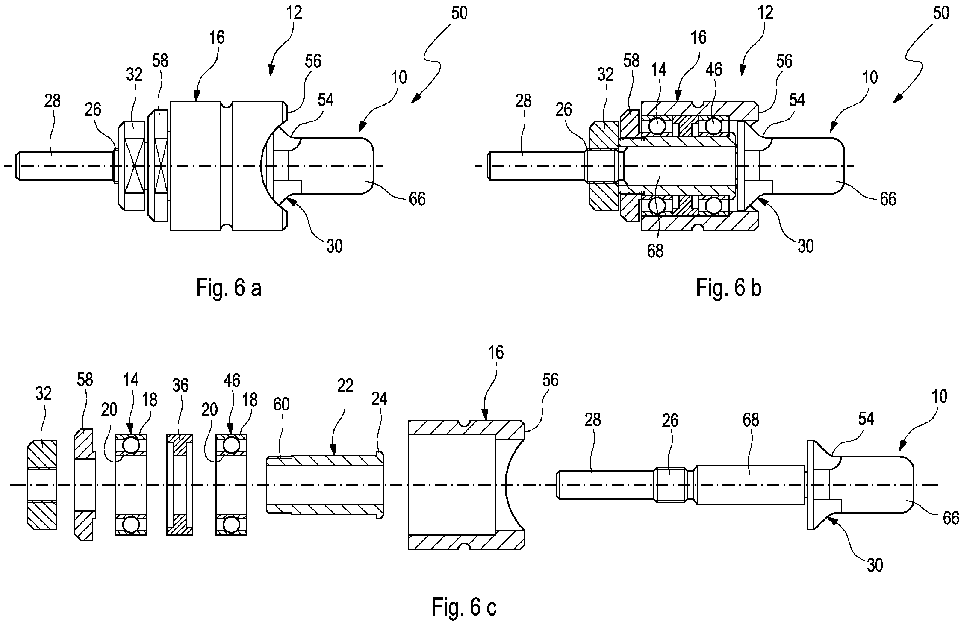

In den Figs. 6, 7 und 8 sind verschiedene Ausführungsformen eines Anschlag-Senkwerkzeuges 50 dargestellt.

Hierzu zeigt Fig. 6 ein Senkwerkzeug 50 dar, das ein Senkwerkzeug 10 umfasst, an dem ein Anschlag 12 befestigt ist, und das im prinzipiellen Aufbau dem Ausführungsbeispiel der Fig. 4 gleicht.

Fig. 6a stellt eine Seitendarstellung des Senkwerkzeugs 50 dar, und Fig. 6b zeigt einen Teilschnitt durch die Teile des Senkwerkzeugs 50, die den Anschlag 12 definieren. Hierzu zeigt Fig. 6c in einer Extraktionsdarstellung die einzelnen funktionalen Elemente des Werkzeugs 50.

Das Senkwerkzeug 50 mit Anschlag umfasst ein Senkwerkzeug 50, das einen Schaft 28 aufweist. Auf dem Schaft 28 ist ein Verstellgewinde 26 angeordnet, der einen Aufnahmebereich des Schafts 28 von einem Schafthülsen-Aufnahmebereich 68 abgrenzt. Die Schafthülse 22 kann über das rückwärtige Ende des Schafts 28 und das Verstellgewinde 26 bis zum Schafthülsen-Aufnahmebereich 68 geschoben und dort beispielsweise mit einem Metallkleber auf dem Schaft 28 verklebt werden. Auch ist ein thermisches Schrumpfpressen der Schafthülse 22 auf dem Aufnahmebereich 68 denkbar. Auf der Schafthülse 22 wird ein zweites Lager 46, eine Lagerverbindungshülse 36 mit einem T-förmigen Querschnitt und ein erstes Lager 14 aufgeschoben, die am Werkzeugkopfende der Schafthülse 22 an einem Gegenlagerring 24 und am anderen Ende mittels einer Lagerspannmutter 58 auf der Schafthülse 22 verspannt werden. Auf der Schafthülse 22 ist hierzu ein Gewindeabschnitt 60 vorgesehen, auf dem die Lagerspannmutter 58 aufschraubbar ist und die Lager 14, 46 verspannen kann. Die erste, außenliegende Lagerbuchse 18 kann in einen Innenhülsenabschnitt der Anschlaghülse 16 eingeklebt oder z.B. thermisch eingespannt werden. Die zweite, innenliegende Lagerbuchse 20 kann längsverschieblich mittels der Lagerspannmutter 58 auf der Schafthülse 22 eingespannt sein, somit kann der Anschlag bei Bedarf vom Werkzeugschaft 28 abgezogen werden. Die Anschlaghülse 16 weist an ihrem werkzeugkopfseitigen Ende einen Anschlagringfläche 56 auf, die bei Erreichen einer Sollsenktiefe auf der Oberfläche eines zu bearbeitenden Werkstücks aufsetzt. Mittels einer Arretiermutter 32 ist eine Verdrehsicherung der Schafthülse 22 gegeben und kann eine axiale Positionierung des Anschlags definiert werden. Die Arretiermutter 32 wird auf den Verstellgewindeabschnitt 26 des Werkzeugschafts 28 aufgeschraubt und verhindert ein axiales Verschieben des Anschlags 12. Die Arretiermutter 32 kann auch die Aufgabe der Lagerklemmung der Anschlaghülse 16 übernehmen. Auf der Schafthülse 22 ist eine Anschlaghülse 16 drehbar gelagert. Die Spannmutter 58 dient zum Einstellen eines Lagerspiels der Anschlaghülse 16. Die Anschlaghülse 16 weist einen frontseitigen Anschlagring 56 auf, wobei nach Eintauchen des Einführzapfens 66 des Senkwerkzeugs 10 in eine Bohrung und entgraten der Bohröffnung durch die Schneiden 54 des Werkzeugkopfs 30 der Anschlagring 56 auf einer Oberfläche des zu bearbeitenden Werkstücks ruhend aufsetzt, ohne diese zu verkratzen und somit eine Eintauchtiefe des Werkzeugs 10 in die Bohrung definiert.

Die Anschlaghülse 16 kann stirnseitig einen umlaufenden Anschlagring 56 aufweisen. Vorteilhafterweise ist der Anschlagring 56 allerdings aus zwei, drei oder mehreren Stirnsegmenten zusammengesetzt, die durch Wölbungsbögen oder rückgesetzte gekrümmte oder abgewinkelte Kantenbereiche miteinander verbunden sind, wie dies in den Figs. 6c, 7 oder 8 dargestellt ist. Somit können Späne aus dem Bearbeitungsbereich nach außen geführt werden und es wird eine verbesserte Luftzuführung und Kühlung des Bearbeitungsbereichs ermöglicht. Die Stirnsegmente können als trapezförmiges Segment eines Kreisrings ausgebildet sein und die rückgesetzten Kantenbereiche können einen radialen Verlauf in Achsrichtung des Werkzeugs aufweisen.

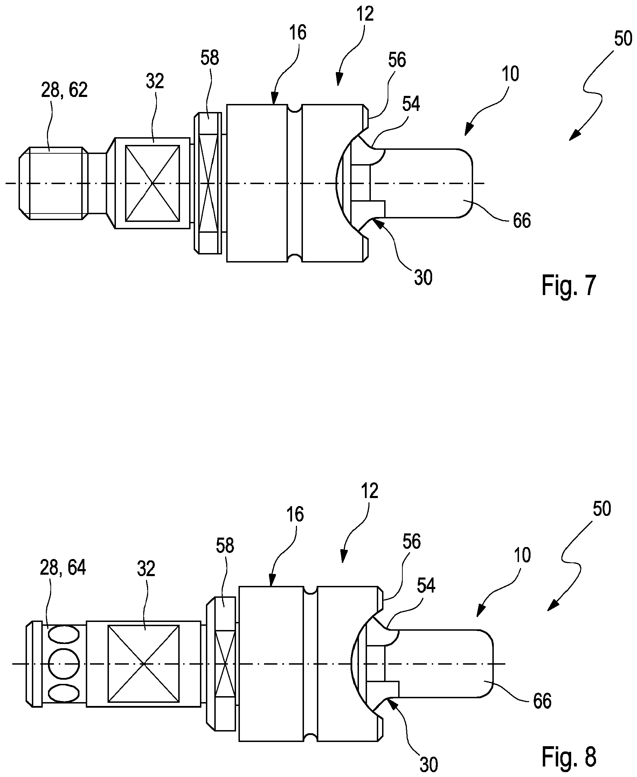

Die Fig. 7 zeigt ein Anschlagwerkzeug 50 wie Fig. 6 mit dem Unterschied, dass die Arretiermutter 32 den spannfutterseitigen Abschluss des Werkzeugs 10 bildet, und einstückig mit einem Gewindeschaft 62 als Werkzeugschaft 28 zur Aufnahme in eine Gewindeaufnahme eines Dreh- oder Bohrwerkzeugs ausgeformt ist. Hierdurch dient die Arretiermutter 32 gleichzeitig als Aufnahme und Spannlager des Werkzeugs 10.

In gleicher Weise stellt Fig. 8 ein weiteres Anschlagwerkzeug 50 dar, wobei die Arretiermutter 32 einen "clickchange"-Schnellwechselschaft 64 umfasst. Alternativ kann der Werkzeugschaft 28 einstückig als Gewindeschaft 62 oder Schnellwechselschaft 64 ausgebildet sein, wobei die Spannschraube 32 und der Verstellring 22 mit aufgelagerter Anschlaghülse 16 derart dimensioniert sein müssen, dass diese über das Schaftende 62, 64 geführt werden können.

Insbesondere im Flugzeugbau müssen eine Vielzahl gleichartiger Senkvertiefungen mittels handgehaltener Senkwerkzeuge hergestellt werden. Insbesondere werden Vertiefungen händisch entgratet. Ein Werker führt den Zapfen des Entgranungssenkers ein und senkt den Anschlag auf das Bauteil, bis der Anschlag aufsitzt und still steht, d.h. sich gegenüber dem drehenden Entgratungswerkzeug nicht bewegt. Hierdurch wird die umliegende Oberfläche um eine Bohrstelle geschützt und nicht verkratzt und der Werker kann eine definierte Senktiefe bzw. Entgratungsqualität erreichen. Das Entgratungswerkzeug kann eine Spanfase oder einen Spanradius aufweisen.

Mittels eines Anschlags 12 können eine Vielzahl verschiedener Werkzeuge 10 mit einem Anschlag nachgerüstet werden, wobei durch ein direktes Antreiben des Werkzeugschafts 28 keine Fehlstellung und kein unrunder Lauf des Werkzeugkopfes 30 auftreten kann und bei Verschleiß lediglich das Werkzeug 10 gewechselt und derselbe Anschlag 12 für eine Vielzahl von Werkzeugen 10 verwendet werden kann. Mittels Adapterhülsen kann der Anschlag 12 an verschiedene Durchmesser eines Werkzeugschafts 28 angepasst werden. Das Senkwerkzeug 10 wird direkt mit einem Spannfutter einer Dreh- oder Bohrmaschine verspannt und der Tiefenanschlag kann durch eine axiale Position der Schafthülse 22 auf dem Werkzeugschaft 28 leicht eingestellt werden. Die Anschlaghülse 16 weist an ihrem axialen Ende einen stirnseitigen Anschlagring 56 auf, der bei Erreichen des Tiefenanschlags auf der Oberfläche eines zu bearbeitenden Bauteils aufsitzt, wobei sich das Werkzeug 10 weiter frei drehen kann, da es mit der Anschlaghülse 16 durch die beiden Lager 14, 46 frei drehbar verbunden ist.

### Bezugszeichenliste

- 10: Senkwerkzeug
- 12: Anschlag
- 14: Lager
- 16: Anschlaghülse
- 18: erste Lagerbuchse
- 20: zweite Lagerbuchse
- 22: Schafthülse
- 24: Gegenlagerring
- 26: Verstellgewinde
- 28: Werkzeugschaft
- 30: Werkzeugkopf
- 32: Arretiermutter
- 34: Lagerring
- 36: Lagerverbindungshülse
- 38: Klebeverbindung
- 40: Zweites Lager
- 42: Verspannsmittel
- 44: Verspannschrauben
- 46: Zweites Lager
- 48: Bohrschaft-Endbereich
- 50: Bohr-, Fräs- oder Senkwerkzeug mit Anschlag
- 52: Eingriffsvertiefung
- 54: Schneide
- 56: Anschlagring
- 58: Lagerspannmutter
- 60: Lagerspanngewinde
- 62: Werkzeug-Gewindeschaft
- 64: Werkzeug-Schnellwechselschaft
- 66: Werkzeugkopf-Einführzapfen

- 68: Schafthülsen-Aufnahmebereich des Werkzeugschafts

- 100: Anschlaghülsenadapter des Stands der Technik
- 102: Werkzeugkopf
- 104: Anschlaghülse
- 106: Adapterschaft
- 108: Einschraubgewinde
- 110: Verstellring
- 112: Endhülse
- 114: Feinverstellung

## Patentansprüche

1. Anschlag (12) für ein rotierendes Bohr-, Fräs- oder Senkwerkzeug (10) umfassend eine mit einem Gleit- oder Wälzlager (14) im eingebauten Zustand um das Werkzeug (10) frei drehbar gekoppelte Anschlaghülse (16) und eine Schafthülse (22), wobei eine erste Lagerbuchse (18) des Lagers (14) die Anschlaghülse (16) trägt, und eine zweite Lagerbuchse (20) des Lagers (14) drehfest auf der Schafthülse (22) sitzt, wobei der Anschlag (12) so gestaltet ist, dass die Schafthülse () auf einen gewindelosen Schaft (28) eine Bohr-, Fräs oder Senkwerkzeugs aufgeschoben und befestigt werden kann, **dadurch gekennzeichnet, dass** zumindest ein zweites, axial versetztes Lager (46) zwischen Anschlaghülse (16) und Schafthülse (22) angeordnet ist, und dass eine Arretiermutter (32), insbesondere eine Rändelmutter umfasst ist, die auf einem Verstellgewinde (26) des Werkzeugschafts (28) aufschraubbar ist und die zur konternden Arretierung der Schafthülse (22) ausgelegt ist

2. Anschlag (12) nach Anspruch 1, **dadurch gekennzeichnet, dass** die Schafthülse (22) auf dem Werkzeugschaft (28) aufschraubbar, anklebbar, aufpressbar oder aufklemmbar ist.

3. Anschlag (12) nach Anspruch 1, **dadurch gekennzeichnet, dass** die erste Lagerbuche (18) in die Anschlaghülse (16) eingeklebt oder eingepresst ist.

4. Anschlag (12) nach Anspruch 3, **dadurch gekennzeichnet, dass** die Arretiermutter (32) einen Werkzeug-Gewindeschaft (62) oder einen Werkzeug-Schnellwechselschaft (64) umfasst.

5. Anschlag (12) nach einem der vorhergehenden Ansprüche, **dadurch gekennzeichnet, dass** eine oder mehrere Adapterbuchsen umfasst sind, die in eine Verstellhülse (24) einsteckbar sind, um deren Innendurchmesser einem Außendurchmesser eines Werkzeugschafts (28) anzupassen.

6. Anschlag (12) nach einem der vorhergehenden Ansprüche, **dadurch gekennzeichnet, dass** eine Lagerspannschraube (58) auf einem Lagerspanngewinde (60) der Schafthülse (22) angeordnet ist, so dass ein Lagerspiel des Lagers (14) einstellbar ist.

7. Bohr-, Fräs- oder Senkwerkzeug mit Anschlag (50), **dadurch gekennzeichnet, dass** am Werkzeugschaft (28) ein Anschlag (12) nach einem der vorangegangenen Ansprüche befestigt ist.

## Claims

1. Stop (12) for a rotating drilling, milling or countersinking tool (10), comprising a stop sleeve (16) coupled to a plain or roller bearing (14) in the installed state so as to be freely rotatable about the tool (10) and a shank sleeve (22), wherein a first bearing bush (18) of the bearing (14) carries the stop sleeve (16), and a second bearing bush (20) of the bearing (14) is seated on the shank sleeve (22) in a rotationally fixed manner, wherein the stop (12) is designed such that the shank sleeve (16) can be slipped onto and fastened to a threadless shank (28) of a drilling, milling or countersinking tool, **characterised in that** at least a second, axially offset bearing (46) is arranged between the stop sleeve (16) and the shank sleeve (22), and **in that** a locking nut (32), in particular a knurled nut, is included, which can be screwed onto an adjusting thread (26) of the tool shank (28) and which is designed for locking the shank sleeve (22) in a countering manner.

2. Stop (12) according to claim 1, **characterised in that** the shank sleeve (22) can be screwed, glued, pressed or clamped onto the tool shank (28).

3. Stop (12) according to claim 1, **characterised in that** the first bearing bush (18) is glued or pressed into the stop sleeve (16).

4. Stop (12) according to claim 3, **characterised in that** the locking nut (32) comprises a threaded tool shank (62) or a quick-change tool shank (64).

5. Stop (12) according to one of the preceding claims, **characterised in that** one or more adapter bushes are included, which can be inserted into an adjusting sleeve (24) in order to adapt its inner diameter to an outer diameter of a tool shank (28).

6. Stop (12) according to one of the preceding claims, **characterised in that** a bearing clamping screw (58) is arranged on a bearing clamping thread (60) of the shaft sleeve (22), so that a bearing clearance of the bearing (14) can be adjusted.

7. Drilling, milling or countersinking tool with stop (50), **characterised in that** a stop (12) according to one of the preceding claims is fastened to the tool shank (28).

## Revendications

1. Butée (12) pour un outil rotatif de perçage, de fraisage ou de lamage (10), comprenant un manchon de butée (16) couplé à un palier lisse ou à roulement (14) à l'état installé de manière à pouvoir tourner librement autour de l'outil (10) et un manchon de tige (22), dans lequel un premier coussinet (18) du palier (14) porte le manchon de butée (16), et un second coussinet (20) du palier (14) est assis sur le manchon de tige (22) de manière à être fixé en rotation, dans lequel la butée (12) est conçue de manière à ce que le manchon de tige (16) puisse être enfilé et fixé sur une tige non filetée (28) d'un outil de perçage, de fraisage ou de lamage, **caractérisé par le fait qu'**au moins un second palier (46) décalé axialement est disposé entre le manchon de butée (16) et le manchon de tige (22), et en ce qu'un écrou de blocage (32), en particulier un écrou moleté, est inclus, qui peut être vissé sur un filetage de réglage (26) de la tige d'outil (28) et qui est conçu pour bloquer le manchon de tige (22) de manière à contrer.

2. Butée (12) selon la revendication 1, **caractérisée en ce que** le manchon de tige (22) peut être vissée, collée, pressée ou serrée sur la tige d'outil (28).

3. Butée (12) selon la revendication 1, **caractérisée en ce que** le premier coussinet (18) est collé ou pressé dans le manchon de butée (16).

4. Butée (12) selon la revendication 3, **caractérisée en ce que** l'écrou de blocage (32) comprend une tige d'outil filetée (62) ou une tige d'outil à changement rapide (64).

5. Butée (12) selon l'une des revendications précédentes, **caractérisée en ce qu'**elle comporte une ou plusieurs douilles d'adaptation qui peuvent être insérées dans un manchon de réglage (24) afin d'adapter son diamètre intérieur à un diamètre extérieur d'une tige d'outil (28).

6. Butée (12) selon l'une des revendications précédentes, **caractérisée en ce qu'**une vis de serrage de palier (58) est disposée sur un filetage de serrage de palier (60) du manchon de tige (22), de sorte qu'un jeu de palier du palier (14) peut être ajusté.

7. Outil de perçage, de fraisage ou de lamage avec butée (50), **caractérisé en ce qu'**une butée (12) selon l'une des revendications précédentes est fixée sur la tige d'outil (28).
